# EUROPÄISCHE PATENTSCHRIFT

(11) **EP 0 777 312 B1**
(45) Veröffentlichungstag und Bekanntmachung des Hinweises auf die Patenterteilung: **25.04.2001**
(21) Anmeldenummer: 96118589.9
(22) Anmeldetag: 20.11.1996
(51) Int. Cl.: H02K 3/50, H02K 1/12, H02K 3/52

(54) **Stator mit Verschaltungsanordnung für Elektromotoren**
Stator with connecting arrangement for electrical motors
Stator pour moteurs électriques avec son dispositif de connexion

(30) Priorität: 01.12.1995 DE 19544830
(43) Veröffentlichungstag der Anmeldung: 04.06.1997
(73) Patentinhaber: ebm Werke GmbH & Co. KG, 74673 Mulfingen (DE)
(72) Erfinder: Best, Dieter, D-74653 Ingelfingen (DE); Reinhardt, Wilhelm, D-74575 Schrozberg-Gütbach (DE); Rebentrost, Rudolf, D-74676 Niedernhall (DE); Walke, Berthold, D-73469 Utzmemmingen (DE); Streng, Gunter, Dipl.-Ing., D-74575 Schrozberg (DE)
(74) Vertreter: Patentanwälte Dr. Solf & Zapf

(56) Entgegenhaltungen:
- EP-A- 0 064 105
- DE-A- 2 441 175
- GB-A- 2 125 636
- US-A- 5 196 752

## Beschreibung

Die vorliegende Erfindung betrifft einen Stator für Elektromotoren, bestehend aus einem Statorblechpaket, Statorwicklungen und einer an einer Stirnseite des Statorblechpaketes angeordneten Verschaltungsanordnung für die Statorwicklungen, wobei die Verschaltungsanordnung ein kreisförmiges Isolierteil mit nutenförmigen Kammern für die Aufnahme von elektrischen, gegeneinander isolierten Verbindungsleitern für die Verschaltung der Wicklungsdrahtenden der Statorwicklungen aufweist.

Ein derartiger Stator ist aus der DE-A-24 41 175 bekannt.

Außerdem beschreibt die US-A-5 196 752 einen Stator, der mehrere Verbindungsleiter aufweist, die einzeln in Nuten blockartiger Isolierteile eingesetzt werden. Dabei werden die im Querschnitt rechteckigen Verbindungsleiter nur abschnittsweise in den Isolierteilen gehalten, verlaufen aber zwischen den Isolierteilen frei und somit nicht isoliert.

Bei anderen Statoren ist eine Verschaltungsanordnung für die Verschaltung der Wicklungsdrahtenden der Statorwicklungen sowie für den Anschluß der Motoranschlußleitungen durch eine stirnseitig am Statorblechpaket angeordnete Leiterplatte (Platine) oder ein leiterplattenähnliches Verschaltungselement gebildet. Dabei werden die Wicklungsdrahtenden über auf der Platine bzw. dem Verschaltungselement angeordnete Leiterbahnen - je nach Betriebsart des Motors - miteinander verschaltet. Derartige Statoren haben jedoch den Nachteil, dass aufgrund der geringen Leiterquerschnitte der auf der Platine angeordneten Leiterbahnen nur geringe Motorströme übertragen werden können. Derartige Statoren eignen sich also lediglich für Motoren geringer Ströme.

Der vorliegenden Erfindung liegt die Aufgabe zugrunde, einen gattungsmäßigen Stator zu schaffen, der insbesondere für Motoren kleiner Spannung (U ≤ 24V) und relativ großer Ströme (S > 20A) geeignet und einfach und kostengünstig herstellbar ist. Ferner soll der zu schaffende Stator auch bei der Art der Verschaltung der Statorwicklungen eine gewisse Variabilität gewährleisten. Des weiteren soll vorzugsweise eine vollautomatische Verschaltung möglich sein.

Erfindungsgemäß wird dies dadurch erreicht, dass das Isolierteil aus mehreren ringförmigen Einzelteilen besteht, wobei die verschiedene Durchmesser aufweisenden Einzelteile des Isolierteils über Verbinderelemente derart konzentrisch miteinander verbunden sind, dass jeweils zwischen den benachbarten Einzelteilen Durchführungen für die Wicklungsdrahtenden gebildet sind. Durch die erfindungsgemäße Ausgestaltung der Verschaltungsanordnung ist es vorteilhafterweise möglich, die Wickeldrahtenden von Motoren größerer Ströme problemlos zu verschalten, ohne dass eine Überhitzung oder Zerstörung der Verschaltungsanordnung zu befürchten ist, denn die Verbindungsleiter können mit großen Querschnitten realisiert werden. Ferner ermöglicht der Gegenstand der Erfindung eine hohe Variabilität beim Verschalten der Wickeldrahtenden, indem in die vorzugsweise als Ringnuten ausgebildeten Kammern einerseits durchgehende Ringleiter oder andererseits einzelne gegeneinander isolierte Ringabschnitte als elektrische Verbindungsleiter für die Wicklungsdrahtenden der Statorwicklungen eingelegt werden können. Es ist vorteihafterweise eine vollautomatische Verschaltung möglich, indem die Koordinaten der Befestigungspunkte festgestellt und eindeutig den Drahtenden der einzelnen Spulen zugeordnet werden können.

Weitere vorteilhafte Merkmale der Erfindung sind in den Unteransprüchen und in der folgenden Figurenbeschreibung enthalten.

Anhand der Zeichnung soll im folgenden die Erfindung beispielhaft näher erläutert werden. Es zeigen:
- Fig. 1: einen Axialschnitt eines Elektromotors mit einem Stator mit einer ersten Ausführungsform einer nicht erfindungsgemäßen Verschaltungsanordnung mit einstückigem Isolierteil,
- Fig. 2: den Stator gem. Fig. 1 in einer axialen Draufsicht auf die Seite der Verschaltungsanordnung,
- Fig. 3: eine schematische Darstellung des Stators mit Statorwicklungen, und zwar beispielhaft in einer möglichen Verschaltung der Statorwicklungen in Dreieckschaltung,
- Fig. 4: ein Ersatzschaltbild zur Verschaltung nach Fig. 3,
- Fig. 5: eine axiale Draufsicht auf die Verschaltungsanordnung ähnlich Fig. 2, jedoch in einer erfindungsgemäßen Ausführungssform mit mehrteiligem Isolierteil,
- Fig. 6, 8 und 10: jeweils in Draufsicht die Einzelteile des Isolierteils nach Fig. 5,
- Fig. 7: einen vergrößerten Querschnitt durch das erste Einzelteil in der Ebene IX-IX gemäß Fig. 6,
- Fig. 9: einen vergrößerten Querschnitt durch das zweite Einzelteil in der Ebene XI-XI gemäß Fig. 8,
- Fig. 11 bis 13: jeweils in Draufsicht (Darstellung a) und als Teil-Axialsschnitt (Darstellung b) den Stator in verschiedenen Herstellungsphasen während der Montage der Verschaltungsanordnung nach Fig. 5.

In der folgenden Figurenbeschreibung und in den verschiedenen Zeichnungsfiguren sind gleiche bzw. sich funktionell entsprechende Teile stets mit denselben Bezugszeichen versehen.

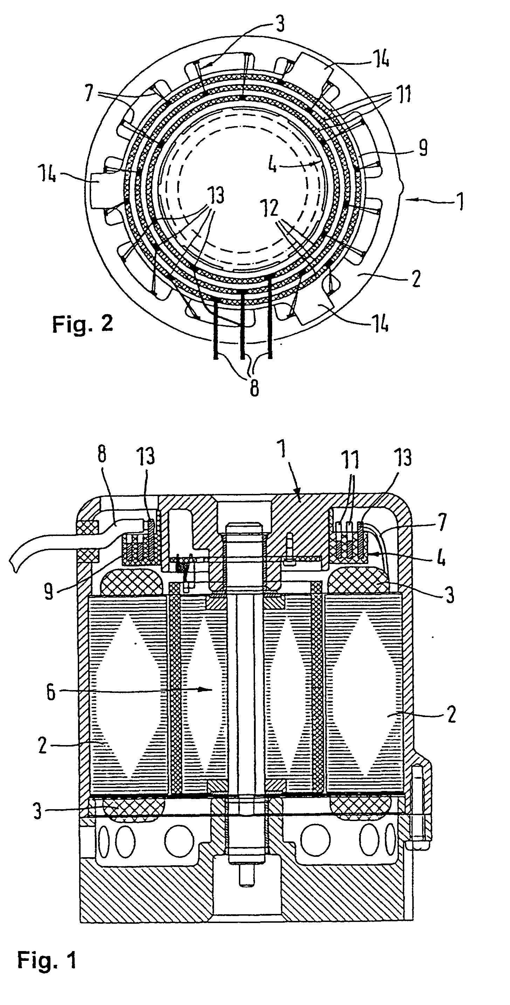

Die Fig. 1 zeigt einen nicht erfindungsgemäßen Elektromotor in einer beispielhaften Ausführung als Innenläufermotor. Der Elektromotor besteht im wesentlichen aus einem Stator 1 mit einem Statorblechpaket 2, Statorwicklungen 3 und einer Verschaltungsanordnung 4 sowie aus einem herkömmlichen Rotor 6. Die erfindungsgemäße Verschaltungsanordnung 4 dient der Verschaltung von Wicklungsdrahtenden 7 der Statorwicklungen 3 sowie dem Anschluß von Motoranschlußleitungen 8.

In der Ausführungsform nach Fig. 1 und 2 weist die Verschaltungsanordnung 4 ein einstückiges Isolierteil 9 mit nutenförmigen Kammern 11 für die Aufnahme von elektrischen, gegeneinander isolierten Verbindungsleitern 12 auf, die dem Anschluß der Wicklungsdrahtenden 7 und der Motoranschlußleitungen 8 dienen. Das Isolierteil 9 ist vorzugsweise kreisringförmig ausgebildet und bezüglich einer Motorachse insbesondere koaxial angeordnet. Dabei sind die Kammern 11 als koaxial in dem Isolierteil 9 angeordnete Ringnuten ausgebildet.

Die vorzugsweise aus Kupfer oder Messing bestehenden, einen insbesondere rechteckigen Querschnitt aufweisenden Verbindungsleiter 12 werden bevorzugt durch Ausstanzen oder Ausschneiden aus Blechmaterial hergestellt. Dabei können die Verbindungsleiter 12 einerseits in Form von durchgehenden Ringen oder andererseits als Streifen ausgebildet sein, wobei die zweckmäßig zunächst geradlinigen Streifen in einem anschließenden Arbeitsgang (Biegevorgang) an die Form der Kammern 11 angepaßt werden.

Ferner ist das Isolierteil 9 mit mindestens einem Halterungsfortsatz 14, in der dargestellten Ausführungsform mit vorzugsweise drei Halterungsfortsätzen 14, für die kraft- und/oder formschlüssige Verbindung mit dem Statorblechpaket 2 versehen.

Die Halterungsfortsätze 14 sind umfänglich gleichmäßig verteilt am Isolierteil 9 angeordnet und insbesondere derart ausgebildet, daß das Isolierteil 9 mittels Rastverbindung am Statorblechpaket befestigbar ist. Hierfür ist der bzw. jeder Halterungsfortsatz 14 vorzugsweise derart winkelförmig ausgebildet, daß er einerseits radial nach außen vom die Kammern 11 aufweisenden Teil des Isolierteils 9 absteht und andererseits einen parallel zur Motorachse verlaufenden, in Richtung Stirnseite des Statorblechpaketes 2 weisenden Abschnitt für die form- und/oder kraftschlüssige Verbindung mit demselben aufweist. Eine Befestigung mittels Schraubverbindung oder dergleichen ist natürlich ebenfalls denkbar.

In Abweichung von der Darstellung in Fig. 2 können die in den ringförmig ausgebildeten Kammern 11 angeordneten Verbindungsleiter 12 aufgrund der einfacheren Herstellbarkeit bevorzugt mindestens an einer Stelle unterbrochen sein. Das hat den Vorteil, daß die Verbindungsleiter 12 mit zunächst geradliniger Form hergestellt, z.B. aus "Endlosmaterial" abgelängt, und anschließend in Kreisform gebogen werden können. Es ist selbstverständlich auch möglich, die Verbindungsleiter 12 nicht als elektrisch durchgehende Ringleiter, sondern als einzelne, gegeneinander elektrisch isolierte Teilabschnitte (Ringsektoren) auszubilden.

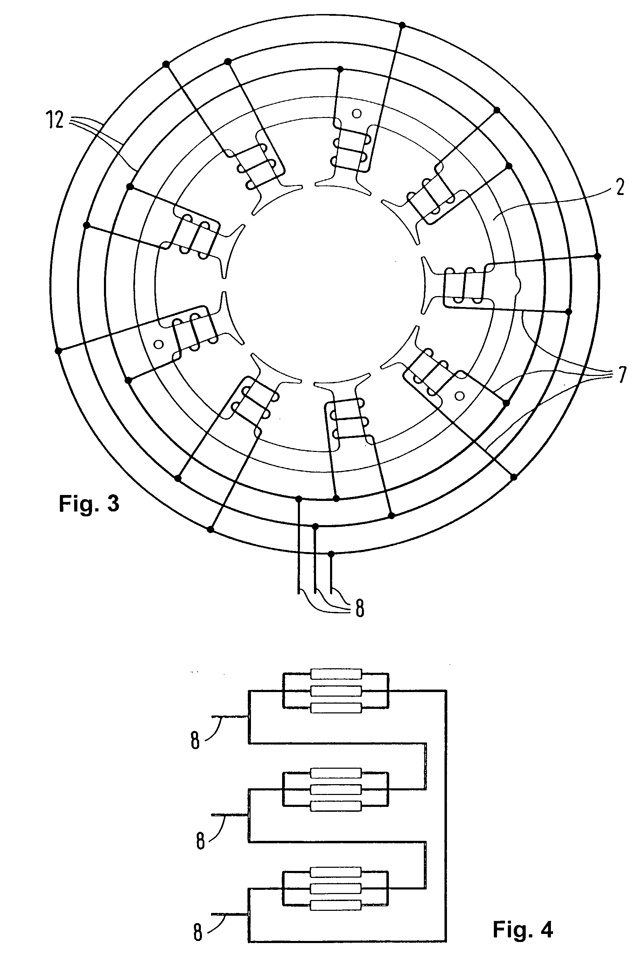

Die Fig. 3 und 4 zeigen beispielhaft eine mögliche Art der Verschaltung der Statorwicklungen 3 in schematischen Darstellungen. Hier sind die verschiedenen Statorwicklungen 3 beispielsweise in Form einer Dreieckschaltung miteinander verschaltet. Die Fig. 3 zeigt das Statorblechpaket 2, wobei die einzelnen Statorwicklungen 3 über die Verbindungsleiter 12 in Dreieckschaltung miteinander verbunden sind. Bei dieser Verschaltungsart weist das Isolierteil 9 bevorzugt drei Kammern 11 für die Aufnahme von drei Verbindungsleitern 12 auf. Die Fig. 4 zeigt das zugehörige elektrische Ersatzschaltbild.

Für eine nicht dargestellte Ausführungsform, die die Sternschaltung der Statorwicklungen beinhaltet, ist ein Isolierteil 9 mit vier Kammern zur Herstellung eines Sternpunktes vorgesehen.

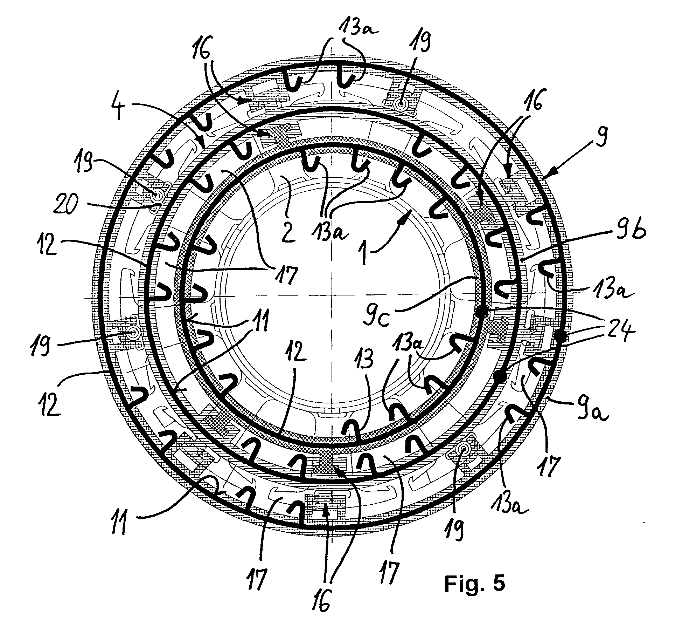

Im folgenden soll anhand der Fig. 5 bis 13 eine bevorzugte Ausführungsform der erfindungsgemäßen Verschaltungsanordnung 4 erläutert werden. Hierbei ist vorgesehen, daß das Isolierteil 9 aus mehreren Einzelteilen 9a, 9b, 9c besteht. Zweckmäßigerweise ist für jeden Verbindungsleiter 12 ein insbesondere entsprechend ringförmiges und die jeweilige Kammer 11 für den Verbindungsleiter 12 aufweisendes Einzelteil vorgesehen. Bei der bevorzugten Ausführung mit drei ringförmigen Verbindungsleitern 12 sind demzufolge ebenfalls drei ringförmige Einzelteile 9a, b, c vorgesehen.

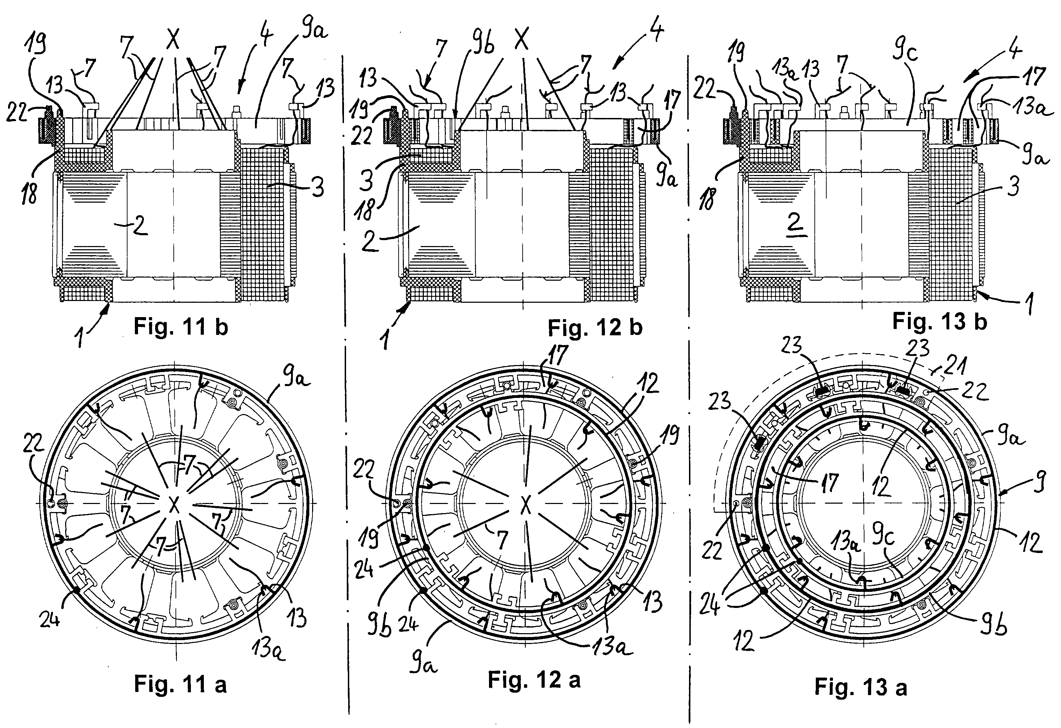

Wie sich aus Fig. 5 und auch aus den Fig. 11 bis 13 ergibt, sind die ringförmigen, mit verschiedenen Durchmessern konzentrischen Einzelteile 9a bis c des Isolierteils 9 über Verbinderelemente 16 derart miteinander verbunden, daß jeweils zwischen den benachbarten Einzelteilen (einerseits 9a und 9b und andererseits 9b und 9c) aufgrund von radialen Abständen Durchführungen 17 für die Wicklungsdrahtenden 7 gebildet sind. Die Verbinderelemente 16 sind bevorzugt als axial ineinanderschiebbare Verbindungsprofile ausgebildet. Im dargestellten Ausführungsbeispiel handelt es sich um T-Profile, jedoch können auch Schwalbenschwanzprofile oder dergleichen vorgesehen sein. Die Verbinderelemente 16 können regelmäßig oder - wie dargestellt - unregelmäßig über den Umfang verteilt angeordnet sein.

Aufgrund der Mehrteiligkeit des Isolierteils 9 i.V.m. den zwischen den Einzelteilen 9a, b, c gebildeten Durchführungen 17 können im Gegensatz zur Ausführungsform nach Fig. 1 bis 6 vorteilhafterweise die Wicklungsdrahtenden von den Statorwicklungen 3 zu den Anschlußfortsätzen 13 geführt werden, ohne hierbei die Verbindungsleiter 12 "überqueren" zu müssen. Dies bedeutet, daß vorteilhafterweise die Wicklungsdrahtenden 7 "unterhalb" der Isolier-Einzelteile, d.h. zwischen dem Stator-Wickelkopf und den Isolier-Einzelteilen 9a, b, c verlaufen können. Es ergibt sich hierdurch eine besonders gute und sichere Isolation zwischen den einzelnen Verbindungsleitern 12 und den Wicklungsdrahtenden 7, und zwar vorteilhafterweise ohne Einhaltung von großen Sicherheitsabständen, die zu einer unnötigen Verlängerung der axialen Baulänge des Motors führen würde.

Die Anschlußfortsätze 13 der Verbindungsleiter 12 weisen bevorzugt endseitige Hakenelemente 13a auf, die nach Einlegen der Wicklungsdrahtenden 7 zur elektrisch leitenden Verbindung verpreßt, insbesondere preßverschweißt, werden. Hierbei liegen die Hakenelemente 13a gemäß Fig. 5 und 11a bis 13a vorzugsweise jeweils axial "oberhalb" der Bereiche der zwischen den Einzelteilen 9a, b, c des Isolierteils 9 gebildeten Durchführungen 17 bzw. "oberhalb" des von dem innersten Einzelteil 9c umschlossenen Querschnittsbereichs. Hierdurch können die Wicklungsdrahtenden 7 jeweils an den Einzelteilen des Isolierteils 9 axial vorbei zu den Hakenelementen 13a geführt werden (s. hierzu insbesondere Fig. 11 bis 13).

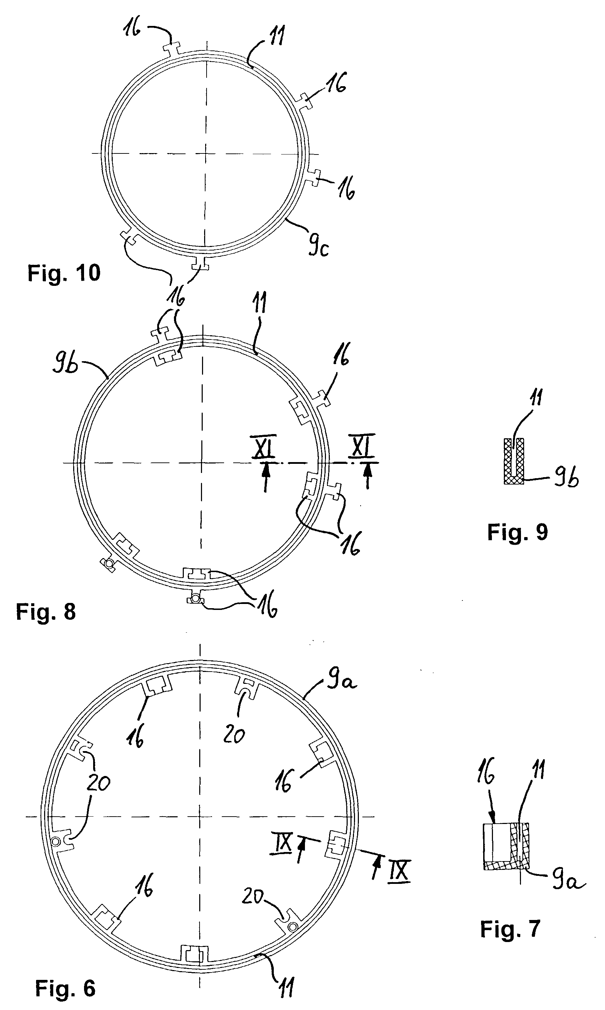

Vorzugsweise ist das Isolierteil 9 über eine Zapfenverbindung am Stator 1 bzw. an einem Isolationsteil 18 befestigt. In der dargestellten Ausführungsform weist hierzu das Isolationsteil 18 mehrere axiale Zapfen 19 auf, die in Öffnungen 20 des Isolierteils 9 eingreifen. Die Zapfen 19 sind am besten in den Fig. 11b, 12b und 13b erkennbar. Die Öffnungen 20 sind in Fig. 6 zu erkennen; sie sind jeweils zwischen dem ersten Isolierteil 9a und dem zweiten Isolierteil 9b gebildet.

An dem Isolierteil 9 kann - wie in Fig. 13a angedeutet ist - auf der den Statorwicklungen 3 axial abgekehrten Seite eine Leiterplatte 21 befestigt sein. Auch diese Befestigung kann vorzugsweise über eine Zapfenverbindung erfolgen, die im dargestellten Beispiel aus mehreren axialen Zapfen 22 des Isolierteils 9 besteht, die in entsprechende Öffnungen der Leiterplatte 21 eingreifen. Die Leiterplatte 21 trägt bestimmte Bauteile einer Motor-Steuerschaltung, insbesondere Rotor-Drehstellungssensoren 23, die üblicherweise als Hall-Sensoren ausgebildet sind. Wie in Fig. 13a erkennbar ist, ragen die Drehstellungssensoren 23 zwischen den Isolier-Einzelteilen 9a und 9b hindurch axial in den Bereich eines Rotors.

Bei dieser Ausführungsform nach Fig. 5 bis 13 ergibt sich eine sehr einfache und wirtschaftliche Herstellung mit guter und sicherer elektrischer Isolation bei geringer Baulänge. Wie sich aus den Fig. 11 bis 13 ergibt, erfolgt die Montage des Motors wie folgt:

Gemäß Fig. 11a, b wird auf den bewickelten Stator 1 das erste, äußere, mit dem Verbindungsleiter 12 bestückte Isolier-Einzeilteil 9a auf die Zapfen 19 aufgeschoben. Während dieser Montage sind alle Wicklungsdrahtenden 7 in einem mit X gekennzeichneten, insbesondere etwa mittigen Punkt in axialer Verlängerung liegend zusammengefaßt und an einer nicht dargestellten Positioniereinrichtung fixiert. Durch diese Fixierung der Wicklungsdrahtenden ist ein einfaches Aufschieben der Isolier-Einzelteile möglich. Nach der Befestigung des ersten Einzelteils 9a werden die für dessen Verbindungsleiter 12 vorgesehenen Wicklungsdrahtenden 7 von der Wickeldraht-Positioniervorrichtung abgenommen und radial nach außen geführt und an den entsprechenden Anschlußfortsätzen 13 bzw. Hakenelementen 13a zunächst mechanisch befestigt. Gemäß Fig. 12a, b wird nun das zweite Isolier-Halteteil 9b axial aufgeschoben, wobei die Verbinderelemente 16 ineinandergeschoben werden. Es werden dann die entsprechenden Wicklungsdrahtenden 7 an den zweiten Verbindungsleiter 12 geführt und mechanisch befestigt.

Schließlich erfolgt gemäß Fig. 13a, b die Montage des dritten Isolier-Einzelteils 9c über die Verbinderelemente 16 mit Anschluß der Wicklungsdrahtenden 7. Erfindungsgemäß entstehen hierbei überkreuzungsfreie Anschlußverbingen, da die Wicklungsdrähte nicht über die Verbindungsleiter 12 geführt sind, sondern unter den Isolier-Einzelteilen verlaufen. Ein Problem bezüglich der Einhaltung von speziellen Sicherheitsabständen besteht folglich nicht; die Sicherheitsisolierung kann auch mit kurzer Baulänge erreicht werden.

Abschließend werden mit einer Preß-Schweißvorrichtung die Wicklungsdrahtenden 7 mit den Hakenelementen 13a verschweißt.

Je nach Anzahl der Spulenwicklungen des Stators werden die Verbindungsleiter 12 mit einer entsprechenden Anzahl von Hakenelementen 13a ausgerüstet. Außerdem sind für den Anschluß der nach außen geführten Motor-Anschlußleitungen Befestigungspunkte 24 (s. Fig. 5 und 11a bis 13a) vorgesehen.

Die Erfindung ist nicht auf die dargestellten und beschriebenen Ausführungen beschränkt. So ist die Anzahl der Kammern 11 bzw. der Verbindungsleiter 12 natürlich abhängig von der gewünschten Schaltungsart bzw. Motorart. Ferner stellt die kreisringförmige Ausgestaltung des Isolierteils 9 nur eine vorteilhafte Ausgestaltung dar. Von der Kreisringform abweichende Ausführungsformen des Isolierteils 9 sind natürlich ebenfalls denkbar. Auch ist es denkbar, die Verbindungsleiter 12 als Leiter mit kreisförmigem Querschnitt auszuführen, die dann in entsprechend angepaßte Kammern 11 einsetzbar sind. Ferner ist es denkbar, das Isolierteil 9 mit Kammern 11 auszubilden, die in axialer Richtung neben- bzw. hintereinander angeordnet sind. Bei einer derartigen Ausführung wären die Kammern 11 radial nach außen randoffen und die Anschlußfortsätze 13 der Verbindungsleiter 12 würden bevorzugt radial nach außen weisend ausgebildet.

## Patentansprüche

1. Stator für Elektromotoren, bestehend aus einem Statorblechpaket (2), Statorwicklungen (3) und einer an einer Stirnseite des Statorblechpaketes (2) angeordneten Verschaltungsanordnung (4) für die Statorwicklungen (3), wobei die Verschaltungsanordnung (4) ein kreisringförmiges Isolierteil (9) mit nutenförmigen Kammern (11) für die Aufnahme von elektrischen, gegeneinander isolierten Verbindungsleitern (12) für die Verschaltung der Wicklungsdrahtenden (7) der Statorwicklungen (3) aufweist,
**dadurch gekennzeichnet,**
daß das Isolierteil (9) aus mehreren ringförmigen Einzelteilen (9a, 9b, 9c) besteht, wobei die verschiedene Durchmesser aufweisenden Einzelteile (9a - c) des Isolierteils (9) über Verbinderelemente (16) derart konzentrisch miteinander verbunden sind, daß jeweils zwischen den benachbarten Einzelteilen (9a, b; 9b, c) Durchführungen (17) für die Wicklungsdrahtenden (7) gebildet sind.

2. Stator nach Anspruch 1,
**dadurch geknnzeichnet,**
daß für jeden Verbindungsleiter (12) ein ringförmiges, die jeweilige Kammer (11) aufweisendes Einzelteil (9a, b, c) vorgesehen ist.

3. Stator nach Anspruch 1 oder 2,
**dadurch gekennzeichnet,**
daß das Isolierteil (9) bezüglich einer Motorachse koaxial angeordnet ist.

4. Stator nach einem oder mehreren der Ansprüche 1 bis 3,
**dadurch gekennzeichnet,**
daß die Kammern (11) in axialer, von dem Statorblechpaket (2) wegweisender Richtung randoffen ausgebildet sind.

5. Stator nach einem oder mehreren der Ansprüche 1 bis 4,
**dadurch gekennzeichnet,**
daß die Verbindungsleiter (12) als kreisring- oder kreisbogenförmige, in den Kammern (11) des Isolierteils (9) angeordnete Leiterelemente ausgebildet sind.

6. Stator nach einem oder mehreren der Ansprüche 1 bis 5,
**dadurch gekennzeichnet,**
daß die Verbindungsleiter (12) aus Kupfer oder Messing bestehen.

7. Stator nach einem oder mehreren der Ansprüche 1 bis 6,
**dadurch gekennzeichnet,**
daß die Verbindungsleiter (12) als ausgestanzte bzw. ausgeschnittene Blechstreifen ausgebildet sind.

8. Stator nach einem oder mehreren der Ansprüche 1 bis 7,
**dadurch gekennzeichnet,**
daß die Verbindungsleiter (12) einen rechteckigen Querschnitt aufweisen.

9. Stator nach einem oder mehreren der Ansprüche 1 bis 8,
**dadurch gekennzeichnet,**
daß die Verbindungsleiter (12) in im Wesentlichen axiale Richtung weisende Anschlußfortsätze (13) für den Anschluß der Wicklungsdrahtenden (7) und bevorzugt von Motoranschlußleitungen (8) aufweisen.

10. Stator nach einem oder mehreren der Ansprüche 1 bis 9,
**dadurch gekennzeichnet,**
daß die Verbindungsleiter (12) in radiale Richtung weisende Anschlußfortsätze (13) für den Anschluß der Wicklungsdrahtenden (7) und bevorzugt von Motoranschlußleitungen (8) aufweist.

11. Stator nach einem oder mehreren der Ansprüche 1 bis 10,
**dadurch gekennzeichnet,**
daß die Verbindungsleiter (12) jeweils als einzelne, innerhalb einer Kammer (11) gegeneinander isolierte Abschnitte eines Leitungslementes gebildet sind.

12. Stator nach einem oder mehreren der Ansprüche 1 bis 11,
**dadurch gekennzeichnet,**
daß die Verbinderelemente (16) der Einzelteile (9a - c) des Isolierteils (9) als axial ineinanderschiebbare Verbindungsprofile ausgebildet sind.

13. Stator nach einem oder mehreren der Ansprüche 9 bis 12,
**dadurch gekennzeichnet,**
daß die Anschlußfortsätze (13) der Verbindungsleiter (12) Hakenelemente (13a) zum Verpressen, insbesondere zum Preßverschweißen, unter Aufnahme der Wicklungsdrahtenden (7) aufweisen.

14. Stator nach Anspruch 13,
**dadurch gekennzeichnet,**
daß die Hakenelemente (13a) jeweils axial versetzt in den Bereichen der zwischen den Einzelteilen (9a, b, c) des Isolierteils (9) gebildeten Durchführungen (17) bzw. im von dem innersten Einzelteil (9c) umschlossenen Querschnittsbereich liegen.

15. Stator nach einem oder mehreren der Ansprüche 1 bis 14,
**dadurch gekennzeichnet,**
daß das Isolierteil (9) über eine Zapfenverbindung am Stator (1) bzw. an einem Isolationsteil (18) befestigt ist, wobei bevorzugt das Isolationsteil (18) mehrere axiale Zapfen (19) aufweist, die in Öffnungen (20) des Isolierteils (9) eingreifen.

16. Stator nach einem oder mehreren der Ansprüche 1 bis 15,
**dadurch gekennzeichnet,**
daß an dem Isolierteil (9) auf der von den Statorwicklungen (3) axial abgekehrten Seite eine Leiterplatte (21) befestigt ist, und zwar vorzugsweise über eine Zapfenverbindung aus mindestens zwei axialen Zapfen (22) des Isolierteils (9), die in Öffnungen der Leiterplatte (21) eingreifen.

17. Stator nach Anspruch 16,
**dadurch gekennzeichnet,**
daß die Leiterplatte (21) Bauteile einer Motor-Steuerschaltung trägt, und zwar zumindest Rotor-Drehstellungssensoren (23), die insbesondere zwischen den Isolier-Einzelteilen (9a, 9b) hindurch axial in den Bereich eines Rotors ragen.

## Claims

1. Stator for electric motors, comprising a laminated stator core (2), stator windings (3) and an interconnection arrangement (4) (which is arranged on one end face of the laminated stator core (2)) for the stator windings (3), in which case the interconnection arrangement (4) has an annular insulating part (9) with chambers (11) in the form of slots for accommodating electrical, mutually insulated, connecting conductors (12) for the interconnection of the winding wire ends (7) of the stator windings (3),
characterized
in that the insulating part (9) comprises a number of annular individual parts (9a, 9b, 9c), in which case the individual parts (9a-c) of the insulating part (9), which have different diameters, are connected to one another concentrically via connector elements (16) in such a manner that bushings (17) for the winding wire ends (7) are formed between each of the adjacent individual parts (9a, b; 9b, c).

2. Stator according to Claim 1,
characterized
in that an annular individual part (9a, b, c), which has the respective chamber (11), is provided for each connecting conductor (12).

3. Stator according to Claim 1 or 2,
characterized
in that the insulating part (9) is arranged coaxially with respect to a motor axis.

4. Stator according to one or more of Claims 1 to 3,
characterized
in that the chambers (11) are designed with open edges in an axial direction pointing away from the laminated stator core (2).

5. Stator according to one or more of Claims 1 to 4,
characterized
in that the connecting conductors (12) are configured as conductor elements in the form of annular rings or circular arcs, and are arranged in the chambers (11) of the insulating part (9).

6. Stator according to one or more of Claims 1 to 5,
characterized
in that the connecting conductors (12) are composed of copper or brass.

7. Stator according to one or more of Claims 1 to 6,
characterized
in that the connecting conductors (12) are in the form of stamped-out or cut-out sheet-metal strips.

8. Stator according to one or more of Claims 1 to 7,
characterized
in that the connecting conductors (12) have a rectangular cross section.

9. Stator according to one or more of Claims 1 to 8,
characterized
in that the connecting conductors (12) have connection projections (13), which point essentially in the axial direction, for connection of the winding wire ends (7) and, preferably, of motor connection lines (8).

10. Stator according to one or more of Claims 1 to 9,
characterized
in that the connecting conductors (12) have connection projections (13), which point in the radial direction, for connection of the winding wire ends (7), and, preferably, of motor connection lines (8).

11. Stator according to one or more of Claims 1 to 10,
characterized in that the connecting conductors (12) are each in the form of individual sections of a cable element which are insulated from one another within a chamber (11).

12. Stator according to one or more of Claims 1 to 11,
characterized
in that the connector elements (16) of the individual parts (9a-c) of the insulating part (9) are in the form of connecting profiles which can be pushed axially one inside the other.

13. Stator according to one or more of Claims 9 to 12,
characterized
in that the connection projections (13) of the connecting conductors (12) have hook elements (13a) for crimping in place, in particular for pressure welding, with the winding wire ends (7) being accommodated.

14. Stator according to Claim 13,
characterized
in that the hook elements (13a) are in each case located such that they are axially offset in the regions of the bushings (17) formed between the individual parts (9a, b, c) of the insulating part (9), and in the cross-sectional region surrounded by the innermost individual part (9c).

15. Stator according to one or more of Claims 1 to 14,
characterized
in that the insulating part (9) is attached to the stator (1) and to an insulation part (18) via a pin connection, in which case the insulation part (18) preferably has a number of axial pins (19) which engage in openings (20) in the insulating part (9).

16. Stator according to one or more of Claims 1 to 15,
characterized
in that a printed circuit board (21) is attached to the insulating part (9), on the side facing axially away from the stator windings (3), to be precise preferably via a pin connection comprising at least two axial pins (22) on the insulating part (9), which engage in openings in the printed circuit board (21).

17. Stator according to Claim 16,
characterized
in that the printed circuit board (21) is fitted with components for a motor control circuit, to be precise at least rotor rotation position sensors (23), which, in particular, project axially into the region of a rotor, between the insulating individual parts (9a, 9b).

## Revendications

1. Stator pour moteurs électriques, composé d'un paquet de tôles de stator-(2), d'enroulements de stator (3) et d'un dispositif de câblage (4) pour les enroulements de stator (3) disposé contre une face frontale du paquet de tôles de stator (2), le dispositif de câblage (4) présentant une partie isolante (9) en forme de couronne de cercle et munie de chambres (11) en forme de gorges, destinées à recevoir des conducteurs électriques de liaison (12) isolés les uns des autres, destinés au câblage des extrémités de fils (7) des enroulements de stator (3),
caractérisé en ce que la partie isolante (9) est composée de plusieurs parties élémentaires annulaires (9a, 9b, 9c), les parties élémentaires (9a-c) de la partie isolante (9), qui présentent différents diamètres, étant reliées entre elles concentriquement par des éléments d'assemblage (16) de telle manière que des passages (17) pour les extrémités de fils (7) des enroulements soient formés entre les parties élémentaires adjacentes (9a, b ; 9b, c).

2. Stator selon la revendication 1, caractérisé en ce que, pour chaque conducteur de liaison (12), il est prévu une partie élémentaire annulaire (9a, b, c), qui présente la chambre (11) correspondante.

3. Stator selon la revendication 1 ou 2, caractérisé en ce que la partie isolante (9) est disposée coaxialement à un axe du moteur.

4. Stator selon l'une ou plusieurs des revendications 1 à 3, caractérisé en ce que les chambres (11) sont ouvertes sur le bord, dans une direction axiale qui s'éloigne du paquet de tôles de stator (2).

5. Stator selon l'une ou plusieurs des revendications 1 à 4, caractérisé en ce que les conducteurs de liaison (12) sont constitués par des éléments conducteurs en forme de couronne de cercle ou d'arc de cercle, disposés dans les chambres (11) de la partie isolante (9).

6. Stator selon l'une ou plusieurs des revendications 1 à 5, caractérisé en ce que les conducteurs de liaison (12) sont faits de cuivre ou de laiton.

7. Stator selon l'une ou plusieurs des revendications 1 à 6, caractérisé en ce que les conducteurs de liaison (12) sont constitués par des lamelles de tôle cisaillées ou découpées.

8. Stator selon l'une ou plusieurs des revendications 1 à 7, caractérisé en ce que les conducteurs de liaison (12) présentent une section rectangulaire.

9. Stator selon l'une ou plusieurs des revendications 1 à 8, caractérisé en ce que les conducteurs de liaison (12) présentent des prolongements de connexion (13) pointant dans une direction sensiblement axiale, pour la connexion des extrémités de fils (7) des enroulements et de préférence des conducteurs de connexion (8) du moteur.

10. Stator selon l'une ou plusieurs des revendications 1 à 9, caractérisé en ce que les conducteurs de liaison (12) présentent des prolongements de connexion (13) pointant dans une direction radiale, pour la connexion des extrémités de fils (7) des enroulements et de préférence de conducteurs de connexion (8) du moteur.

11. Stator selon l'une ou plusieurs des revendications 1 à 10, caractérisé en ce que les conducteurs de liaison (12) sont constitués par des segments distincts d'un élément de conducteur isolés les uns des autres à l'intérieur d'une chambre (11).

12. Stator selon l'une ou plusieurs des revendications 1 à 11, caractérisé en ce que les éléments d'assemblage (16) des parties élémentaires (9a-c) de la partie isolante (9) sont constitués par des profilés de liaison qui peuvent être emboîtés l'un dans l'autre dans la direction axiale.

13. Stator selon l'une ou plusieurs des revendications 9 à 12, caractérisé en ce que les prolongements de connexion (13) des conducteurs de liaison (12) présentent des éléments en crochet (13a) destinés à être pressés, en particulier soudés avec pression, en recevant les extrémités de fils (7) des enroulements.

14. Stator selon la revendication 13, caractérisé en ce que les éléments en crochet (13a) se trouvent, avec décalage axial, dans les régions des passages (17) formés entre les parties élémentaires (9a, b, c) de la partie isolante (9), ou respectivement dans la région de la section qui est entourée par la partie élémentaire (9c) la plus intérieure.

15. Stator selon l'une ou plusieurs des revendications 1 à 14, caractérisé en ce que la partie isolante (9) est fixée, par une liaison à tenons, au stator (1) ou à une partie d'isolation (18), la partie d'isolation (18) présentant de préférence plusieurs tenons axiaux (19) qui sont engagés dans des ouvertures (20) de la partie isolante (9).

16. Stator selon l'une ou plusieurs des revendications 1 à 15, caractérisé en ce qu'un circuit imprimé (21) est fixé à la partie isolante (9), sur la face qui est éloignée axialement des enroulements de stator (3), plus précisément par une liaison à tenons composée d'au moins deux tenons axiaux (22) de la partie isolante (9) qui sont engagés dans des ouvertures du circuit imprimé (21).

17. Stator selon la revendication 16, caractérisé en ce que le circuit imprimé (21) porte des composants d'un circuit de commande de moteur, plus précisément au moins des capteurs (23) de position angulaire du rotor, qui sont en particulier engagés axialement dans la région d'un rotor en passant entre les parties élémentaires isolantes (9a, 9b).
